# EUROPEAN PATENT APPLICATION

(11) **EP 1 310 534 A1**
(43) Date of publication of application: **14.05.2003**
(21) Application number: 01204252.9
(22) Date of filing: 07.11.2001
(51) Int. Cl.: C09D 163/00, C09D 4/00, C09D 167/00, C09D 5/00

(54) **Treating primer for coil coating**

(71) Applicant: Sigma Coatings S.A., 2100 Deurne (BE)
(72) Inventor: Belladone, Michel, 1301 Bierges (BE); Cattiaux, Florence, 59880 Saint-Saulve (FR); Pigeolet, Philippe, 1435 Corbais (BE); Vranken, Paul, 1731 Zellik (BE)
(74) Representative: Frith, Richard William

(57) **Abstract**

The primer contains at least one compound selected from organosilanes R₁-(CH₂)ₐ-(O-(CH₂)_{c})_{b}-Si-[(O-(CH₂)_{c})_{b}-OR₂]₃ wherein a=0-4, b=0-1, c=1-4, R₁ is -CH₃, -NH₃, -CH=CH₂, -CH-CH₂-Oₗ and R₂ is -CH₃ or -C₂H₅, and/or epoxy adducts of phosphoric acid. It dispenses with the use of acid and/or toxic pretreatment solutions, and allows two-coat systems to be applied in one pass on standard coil coating lines.

## Description

The present invention relates to a primer for coil coating. In particular, it relates to a treating primer.

The present coil coating process include a pretreatment phase to optimise mechanical properties and corrosion resistance of pre-coated steel. Accordingly, one of the two coating units present on nearly all industrial coil coating lines has to be used for the pretreatment. It follows that only one coating unit remains available for applying at least one primer coating and one topcoat, and that a second pass is required. There is thus a need in the art for a treating primer that would allow the pretreatment and the application of the primer to be carried out simultaneously with only one coating unit.

This treatment consists in preparing the surface by a chemical conversion such as described in the book "Le livre de l'acier", ch.29 "Les traitements de conversion", p.700-709, Techniques & Documentation - Lavoisier 1994. The various pretreatments are well-known in the art. As examples of conversion treatments, one can cite chromatation, alcaline oxydation and phosphatation according to metal substrate (Aluminium, galvalume 55%Zinc/45%Al, galfan 95%Zinc/5%Al, Cold rolled steel and Hot dipped galva). All pretreatments up to now require the use of solutions that are generally acid and that are more or less toxic, hence that cause effluent disposal problems. There is thus a need in the art for a treating primer that would dispense with the use of acid and/or toxic solutions.

Coil coating means any coating applied to steel, galvanized steel or aluminium sheets or strips which are then rolled into coils for further industrial or commercial use. The coating may be paints, plastics or laminated films.

The object of the invention is to provide a treating primer for coil coating by incorporating into a primer at least one compound selected from the group consisting of:
i) organosilanes of general formula

   R₁-(CH₂)ₐ-(O-(CH₂)_{c})_{b}-Si-[(O-(CH₂)_{c})_{b}-O-R₂]₃

   wherein R₁ is selected from the group consisting of -CH₃, -NH₃, -CH=CH₂ and -CH-CH₂-Ol,
   a = 0 - 4
   each b independently is 0 or 1
   each c independently is from 1 to 4
   each R₁ independently is -CH₃ or -C₂H₅
ii) epoxy adducts of phosphoric acid and
iii) mixtures thereof.

The present invention provides also a process for coil coating untreated substrates characterised in that one step of the process is the coating of the untreated substrates with a treating primer containing a compound selected from the group consisting of:
i) organosilanes of general formula

   R₁-(CH₂)ₐ-(O-(CH₂)_{c})_{b}-Si-[(O-(CH₂)_{c})_{b}-O-R₂]₃

   wherein R₁ is selected from the group consisting of
   -CH₃, -NH₃, -CH=CH₂ and -CH-CH₂-Ol,
   a = 0 - 4
   each b independently is 0 or 1
   each c independently is from 1 to 4
   each R₁ independently is -CH₃ or -C₂H₅
ii) epoxy adducts of phosphoric acid and
iii) mixtures thereof

The total amount of said compounds is preferably of 1 to 10 wt % of the total primer formulation, more preferably of 3 to 9 wt %, most preferably of 5 to 8 wt%.

The preferred organosilanes are selected from the group consisting of 3-glycidyloxypropyl trimethoxysilane, 3-glycidyloxypropyl triethoxysilane, n-propyl triethoxysilane, 3-aminopropyl trimethoxysilane, 3-aminopropyl triethoxysilane, vinyl tris(2-methoxyethyl) silane, vinyl tris(2-ethoxymethyl) silane, and mixtures thereof.

The preferred epoxy adducts of phosphoric acid are based on diepoxy resin having a weight average molecular weight Mw of 300 to 1000.

It is also preferred to use adducts wherein the molar ratio is of about one phosphoric acid to one epoxy group.

The primer of the invention further comprises at least one binder system, one or more pigments and one or more solvents.

The binder system preferably consist of one or more polyester resins with one or more cross-linking agents adapted to the use in coil coating.
The polyester resins preferably have a number average molecular weight of 2000 - 20000 (preferably 3000-10000), an acid number of 0 to 20 (more preferably 5-10) and a hydroxyl index of 10 to 70 (more preferably 20-50).

The polyester resin used in this primer is preferably linear or branched hydroxyfunctional polyester.

Raw materials selection and reactant amounts calculation as a function of desired properties is known in the art (see e.g vol III, pp.81 ff. in "A Manual of Resins for Surface Coatings", M.J Husbands et al. SITA, London, 1987) and need not be described here.
Suitable cross-linking agents are known in the art and need also not be described here.

As typical examples of cross-linking agents, one can cite :
- blocked polyisocyanates : aliphatic, cycloaliphatic and aromatic types (isophorone diisocyanate, trimethyl hexamethylene diisocyanate, hexamethylene diisocyanate dimer or trimer, toluene diisocyanate etc...);
- fully, partially or non alkoxylated melamines, benzoguanamines, ureas and glycolurils.

The weight ratio of polyester resin to cross-linking agent is of from 95/5 to 80/20, preferably 85/15.

As known in the art, an appropriate cross-linking catalyst must be used, in an amount which must be sufficient to provide for complete reaction during the short heating time of coil coating processes.

An amino crosslinker requires an acid catalyst, preferably a blocked catalyst. A variety of different catalysts exists such as dinonylnaphthalene disulfonic acid, dinonylnaphthalene sulfonic acid, dodecylbenzene sulfonic acid and p-toluene sulfonic acid.
An isocyanate crosslinker requires a tin metal catalyst (DBTL dibutyl-tin-laurate) or a non-tin catalyst (organometallic complex, bismuth or zirconium complex).

The pigments used are the usual pigments used in primers for use in coil coating. Typically they comprise one or more anti-corrosive pigments and may additionnally comprise on or more other pigments.

The anti-corrosive pigments (also called inhibitors) can be of the chromate type or of a chrome-free type.

The minimum amount of inhibitor is 1% of the total amount of pigments and it can be increased up to 100%. The most preferred chromate is strontium chromate. The preferred chrome-free inhibitors are modified orthophosphate hydrates or modified polyphosphates hydrates. The most preferred are polyphosphates hydrates (combination of zinc, strontium, calcium and aluminium polyphosphates).

As examples of other pigments, one can cite mineral pigments such as titanium dioxide, talcs, clays, carbonates or sulphates.

The weight ratio of the pigment to the binder system is preferably of 0.2 to 2, more preferably of about 0.4 to 1.

One or more solvents are also used, generally in an amount of 30 to 70 wt% of the total composition, more generally 40 to 60 wt% most generally about 50wt%. The amount of solvent is selected to obtain a primer having an appropriate viscosity for use in coil coating lines.

The nature of the solvent base is selected to have a good solvent power towards the polyester resin, the cross-linking component and the catalyst.
The boiling range of the solvent base must be suitable for the coil coating process. A boiling temperature or range between 120 and 250°C, preferably 150 - 200°C, is generally used.

The treating primer is generally applied on the untreated coil substrate in layers having a dry film thickness of 3 to 30 µm.

Both faces of the non treated coil substrate can be coated with this primer.
The coating is cured by cross-linking, typically at a peak metal temperature (PMT) of from 180 to 280 °C, preferably 220 - 250°C.

The line speed is usually in the range of 30 to 180 m/min, typically 120m/min. The primer composition of the invention can be used on different untreated substrates such as aluminium, galvalume (55% Zn / 45% Al), galfan (95% Zn / 5% Al), steel and particularly Cold rolled steel (CRS) and Hot Dipped Galva (HDG).

The primer can be covered with substantially all top-coat formulations capable of being applied using coil coating lines; the resulting coating had excellent intercoat adhesion and mechanical properties.

The invention will be further described by reference to the following examples.

### Examples 1 to 7 and comparative examples A and B

Three different polyesters (P1, P2, P3) especially suitable for coil coating application were used; their properties are mentionned in table 1

**Table 1**

| PROPERTIES | P1 | P2 | P3 |
|---|---|---|---|
| Mw g/mole | 5000 | 10000 | 50000 |
| OH index | 60 | 27 | 15 |
| Acid index | 5 5 | | 5 |

The following primer paints composition (in weight) were prepared:

**Table 2**

| EXAMPLES | TREATING PRIMERS | | | | | | | | | |
|---|---|---|---|---|---|---|---|---|---|---|
| | 1 | 2 | 3 | 4 | 5 | 6 | 7 | 8 | A B | |
| P1 | 47.93 | | | 47.93 | | | | | | |
| P2 | | 49.65 | | | | | | | | |
| P3 | | | 57 | | 57 | 57 | 57 | 57 | 57 | 57 |
| Blocked | | | | | 5.40 | | 5.40 | 5.40 | 5.40 | |
| Polyisocyanate | | | | | | | | | | |
| HMMM | 5.70 | 5.5 | 4.10 | 5.70 | | 4.10 | | | | 4.10 |
| Tin catalyst | | | | | 0.5 | | 0.5 | 0.5 | 0.5 | |
| Blocked acid | | | | | | | | | | |
| Catalyst | 0.57 | 0.55 | 0.4 | 0.57 | | 0.4 | | | | 0.4 |
| S1 | | 2 | 9 | | | 3 | 4 | | | |
| S2 | 3 | | | 5 | | | | | | |
| S3 | | | | | | | 4 | | | |
| S4 | | 4 | | | 3 | | | | | |
| Epoxy adduct | 3 | 2 | | | | 2 | | 6 | | |
| SrCrO4 | 15.50 | 15 | 11.0 | 15.50 | 11.0 | 7 7 4 4 0.3 0.3 | | 15.5 | 11 | |
| Polyphosphate | | | | | | | | | | 7 |
| TiO2 | | | | | | | | | | 4 |
| Aerosil® | 0.3 | 0.3 | 0.3 | 0.3 | 0.3 | | | 0.3 | 0.3 | 0.3 |
| Solvents | 24 | 20.30 | 18.20 | 25 | 22.8 | 22.2 | 17.8 | 24 | 25.8 | 27.2 |
| Weight ratio P/B | 0.43 | 0.43 | 0.42 | 0.43 | 0.42 | 0.42 | 0.42 | 0.42 | 0.42 | 0.42 |
| Total | 100 | 100 | 100 | 100 | 100 | 100 | 100 | 100 | 100 | 100 |
| HMMM: Hexamethoxymethylmelamine S1: 3 glycidyloxypropyltrimethoxysilane S2: Propyltrimethoxysilane S3: 3-Aminopropyltriethoxysilane S4: Vinyl-tris(2-methoxyethoxy)silane) | | | | | | | | | | |

The blocked polyisocyanate used is a trifunctional aliphatic urethane crosslinker

The weight ratio P/B is the weight ratio of the pigment to the polyester resin and the cross linking agent.
The epoxy adduct was prepared by using epoxide resin from Resolution known under the trade mark Epikote 1001® and phosphoric acid in order to get a molar ratio of one phosphoric acid to one epoxy group.

All the primer paints composition had a weight ratio of polyester resin to cross linking resin of 85/15.

The substrate was 0.75 mm thick hot dipped galvanised steel (HDG) without pretreatment.
For all the examples as well as for the comparative examples, the dry thickness of the primer applied on the front side and on the back side side of the hot dipped galvanised steel is mentionned in table 3.
The dwell time conditions were as follows: forty seconds at 350°C in order to get a peak metal temperature of from 224°C to 232°C.
For all the examples as well as for the comparative examples, the primer which has been coated on the front side of the hot dipped galvanised steel is covered with a polyester top coat .The dry tickness of the polyester top coat is 20 µm.
The properties of coated coils were evaluated as follows:
1. Erichsen 8 mm following the standard method ECCA T6. The properties of the systems were evaluated according to the following classification:
   - 10: No cracking, perfect adhesion
   - 9: Slight cracking (magnifying gloss 10x) - perfect adhesion
   - 8: Slight cracking (eye) - perfect adhesion
   - 7: Big cracking - perfect adhesion
   - 6: No cracking - detachment with scotch tape
   - 5: Slight cracking (magnifying gloss 10x)- detachment with scotch tape
   - 4: Slight cracking (eye) - detachment with scotch tape
   - 3: Big cracking - detachment with scotch tape
   - 2: Total delamination on the tape with sootch tape
   - 1: Total delamination without adhesive
2. Zero T-Bend adhesion following the standard method ECCA T7 and according to the above classification
3. Reverse Impact following the standard method ECCA T5 and according to the above classification
4. Salt spray testing following the standard method ISO 7253 and evaluation of the corrosion according to ECCA-T8 standard method. The corrosion is expressed in mm along the cross and on the cut edge.
5. Water immersion test following the standard method ISO 6270. After 1000 Hours, signs of blistering are examined in accordance with the appropriate part of ISO 4628.

Below, the results found on hot dipped galvanised steel (HDG) non treated are mentioned:

**Table 3**

| **FRONT SIDE** | | | | | | | | | | |
|---|---|---|---|---|---|---|---|---|---|---|
| Primer | Ex 1 | Ex 2 | Ex 3 | Ex 4 | Ex 5 | Ex 6 | Ex 7 | Ex 8 | A | B |
| Dry thickness (µm) | 7 | 7 | 7 | 7 | 5 | 10 | 20 | 7 | 7 | 7 |

| **BACK SIDE** | | | | | | | | | | |
|---|---|---|---|---|---|---|---|---|---|---|
| Primer | Ex 1 | Ex 2 | Ex 3 | Ex 4 | Ex 5 | EX 6 | Ex 7 | Ex 8 | A | B |
| Dry thickness (µm) | 7 | 7 | 7 | 7 | 7 | 7 | 7 | 7 | 7 | 7 |

| **MECHANICAL TESTS** | | | | | | | | | | |
|---|---|---|---|---|---|---|---|---|---|---|
| Erichsen 8mm | 9 | 10 | 10 | 9 | 10 | 10 | 10 | 8 | 2 | 2 |
| 0T adhesion | 7 | 7 | 8 | 8 | 8 | 8 | 8 | 7 | 1 | 1 |
| Reverse Impact | 8 | 8 | 8 | 8 | 8 | 8 8 7 | | | 2 | 2 |

| **1000 H SALT SPRAY** | | | | | | | | | | |
|---|---|---|---|---|---|---|---|---|---|---|
| Cross | 1 | 1 | 1 | 2 | 2 | 0 | 1 | 2 | 5 | 7 |
| Edge | 6 | 4 | 5 | 7 | 7 | 4 | 4 | 7 | 9 | 10 |
| **1000 H WATER IMMERSION** | 0 | 0 | 0 | 0 | 0 | 0 | 0 | 0 | 4(S2) | 4(S2) |

The comparative non treated hot dipped galvanised steel shows after 1000 hours water immersion, blisters having a density rating of 4 and a size rating of 2 (hence the notation 4(S2)).

## Claims

1. Use in coil coating of a primer containing a compound selected from the group consisting of:
i) organosilanes of general formula
R₁-(CH₂)ₐ-(O-(CH₂)_{c})_{b}-Si-[(O-(CH₂)_{c})_{b}-O-R₂]₃
wherein R₁ is selected from the group consisting of
-CH₃, -NH₃, -CH=CH₂ and -CH-CH₂-Ol,
a = 0 - 4
each b independently is 0 or 1
each c independently is from 1 to 4
each R₁ independently is -CH₃ or -C₂H₅
ii) epoxy adducts of phosphoric acid and
iii) mixtures thereof
the primer being applied on untreated substrates.

2. Use according to claim 1, wherein the compound is selected from the group consisting of 3-glycidyloxypropyl trimethoxysilane, 3-glycidyloxypropyl triethoxysilane, n-propyl triethoxysilane, 3-aminopropyl trimethoxysilane, 3-aminopropyl triethoxysilane, vinyl tris(2-methoxyethyl) silane, vinyl tris(2-ethoxymethyl) silane, and mixtures thereof.

3. Use according to claim 1, wherein the epoxy adducts of phosphoric acid are based on epoxy resin having a weight average molecular weight of 300 to 1000.

4. Use according to claim 1 wherein said compounds are in an amount of from 1 to 10% by weight of the total primer formulation, preferably of from 3 to 9%, more preferably of from 5 to 8 %.

5. Use according to any one of claims 1 to 4, wherein the primer for coil coating essentially comprises:
- one binder system,
- one or more pigments,
- one or more solvents and
- the compound.

6. Use of the primer according to claim 1 wherein the untreated substrates are selected from the group consisting of aluminium, galvalume, galfan, cold rolled steel, and hot dipped galva.

7. A process for coal coating untreated substrates **characterised in that** one step of the process is the coating of the untreated substrates with a treating primer containing a compound selected from the group consisting of:
i) organosilanes of general formula
R₁-(CH₂)ₐ-(O-(CH₂)_{c})_{b}-Si-[(O-(CH₂)_{c})_{b}-O-R₂]₃
wherein R₁ is selected from the group consisting of
-CH₃, -NH₃, -CH=CH₂ and -CH-CH₂-Ol,
a = 0 - 4
each b independently is 0 or 1
each c independently is from 1 to 4
each R₁ independently is -CH₃ or -C₂H₅
ii) epoxy adducts of phosphoric acid and
